# EUROPEAN PATENT APPLICATION

(11) **EP 3 748 594 A1**
(43) Date of publication of application: **09.12.2020**
(21) Application number: 20161868.3
(22) Date of filing: 09.03.2020
(51) Int. Cl.: G08B 13/196

(54) **STORE MANAGEMENT SYSTEM AND METHOD**

(30) Priority: 06.06.2019 JP 2019106346
(71) Applicant: Toshiba TEC Kabushiki Kaisha, Tokyo 141-8562 (JP)
(72) Inventor: KOGURE, Kazunari, Shinagawa-ku, Tokyo 141-8562 (JP); ISHIHARA, Satoru, Shinagawa-ku, Tokyo 141-8562 (JP); ITO, Mikio, Shinagawa-ku, Tokyo 141-8562 (JP)
(74) Representative: Bandpay & Greuter

(57) **Abstract**

A store management system includes a first determination unit, a monitoring unit, a settlement unit, a second determination unit, and a generation unit. The first determination unit determines a customer entering a store displaying and selling a commodity. The monitoring unit monitors that the customer determined by the first determination unit carries the commodity. The settlement unit settles price of the commodity monitored by the monitoring unit as being carried by the customer, according to instruction from the customer. The second determination unit determines that the customer leaves the store. The generation unit generates history data including suspicious data indicating that the customer, identified by an identification code, is associated with an unsettled commodity being carried out of the store, when a settlement of the commodity carried by the customer which is determined by the second determination unit as leaving the store has not been completed by the settlement unit.

## Description

### FIELD

Embodiments described herein relate generally to a store management system and a store management method.

### BACKGROUND

Various store management systems are devised which enables a customer to purchase a commodity displayed in a store without involvement of a store clerk. As an example, the store management system detects that the customer takes the commodity displayed in the store from an image of the store captured by a camera. The store management system registers the commodity detected as being taken by the customer as a purchased commodity of the customer. The store system settles a price for the purchased commodity under an operation of the customer in a payment apparatus installed in a checkout corner.

In the store management system, since the store clerk is not involved in a behavior of the customer in principle until a customer leaves the store, some measure used to detect a suspicious behavior of the customer may be desirable. For this reason, it was desired to be able to manage the suspicious behavior of the customer.

Furthermore, in the case where images or the like acquired by a camera is associated with each customer and stored in a memory against the suspicious behavior of the customer, a huge amount of data needs to be stored.

### DESCRIPTION OF THE DRAWINGS

FIG. 1 is a block diagram illustrating a schematic configuration of a store management system according to an embodiment.
FIG. 2 is a block diagram illustrating a main circuit configuration of a sales management apparatus of FIG. 1.
FIG. 3 is a diagram schematically illustrating a structure of record data included in a second database.
FIG. 4 is a block diagram illustrating a main circuit configuration of a check-in apparatus of FIG. 1.
FIG. 5 is a flow chart of a check-in process by a processor of FIG. 4.
FIG. 6 is a flowchart of a sales management process by a processor of FIG. 2
FIG. 7 is a diagram illustrating an example of history data when a target customer leaves a store in a state where there is no unsettled purchased commodity.
FIG. 8 is a diagram illustrating an example of the history data when the target customer leaves the store in a state where there is the unsettled purchased commodity.
FIG. 9 is a flowchart of a response process.

### DETAILED DESCRIPTION

A problem to be solved by an exemplary embodiment is to provide a store management system and a store management method capable of managing a suspicious behavior of a customer.

A store management system according to the embodiment includes a first determination unit, a monitoring unit, a settlement unit, a second determination unit, and a generation unit. The first determination unit determines a customer who enters a store that displays and sells a commodity. The monitoring unit monitors that the customer determined by the first determination unit carries the commodity. The settlement unit settles a price of the commodity which is monitored by the monitoring unit as being carried by the customer, according to an instruction from the customer. The second determination unit determines that the customer leaves the store. The generation unit generates history data including suspicious data indicating that the customer, identified by an identification code, is associated with an unsettled commodity being carried out of the store, when a settlement of the commodity carried by the customer which is determined by the second determination unit as leaving the store has not been completed by the settlement unit.

The store management system may further comprise a storage unit configured to store each of a plurality of pieces of history data generated for the same customer by the generation unit.

Preferably, the generation unit includes, in the history data, information regarding a commodity that has been monitored by the monitoring unit and determined to be unsettled by the settlement unit.

The store management system may further comprise an alarm unit configured to issue an alarm when a customer associated with the suspicious data included in the history data visits the store.

Preferably, the history data further includes a date and time when the customer enters the store, and a date and time when the customer leaves the store.

Preferably, the monitoring unit is configured to communicate with at least one of a plurality of sensors to monitor that the customer, each of the plurality of sensors configured to detect a behavior of the customer and a display status of the commodity.

Preferably, the second determination unit is configured to communicate with at least one of a plurality of sensors to determine that the customer leaves the store, each of the plurality of sensors configured to detect a behavior of the customer and a display status of the commodity.

The system according to the present invention enables to reduce the amount of data stored in the storage unit to monitor suspicious behavior of customers while improving the accuracy of the behavior monitoring on the customers.

The present invention further relates to a store management method comprising: determining a customer who enters a store that displays and sells a commodity; monitoring that the customer determined to enter the store carries the commodity; settling a price of the commodity which is monitored as being carried by the customer, according to an instruction from the customer; determining that the customer leaves the store; and generating history data including suspicious data indicating that the customer, identified by an identification code, is associated with an unsettled commodity being carried out of the store, when a settlement of the commodity carried by the customer which is determined to leave the store is not completed.

The store management method may further comprise storing each of a plurality of pieces of history data generated for the same customer by the generation unit.

Preferably, the history data includes information regarding a commodity that has been monitored and determined to be unsettled.

The store management method may further comprise issuing an alarm when a customer associated with the suspicious data included in the history data visits the store.

Preferably, the history data further includes a date and time when the customer enters the store, and a date and time when the customer leaves the store.

The store management method may further comprise communicating with at least one of a plurality of sensors to monitor that the customer, each of the plurality of sensors configured to detect a behavior of the customer and a display status of the commodity.

The store management method may further comprise communicating with at least one of a plurality of sensors to determine that the customer leaves the store, each of the plurality of sensors configured to detect a behavior of the customer and a display status of the commodity.

Hereinafter, an example of an embodiment will be described with reference to the drawings.

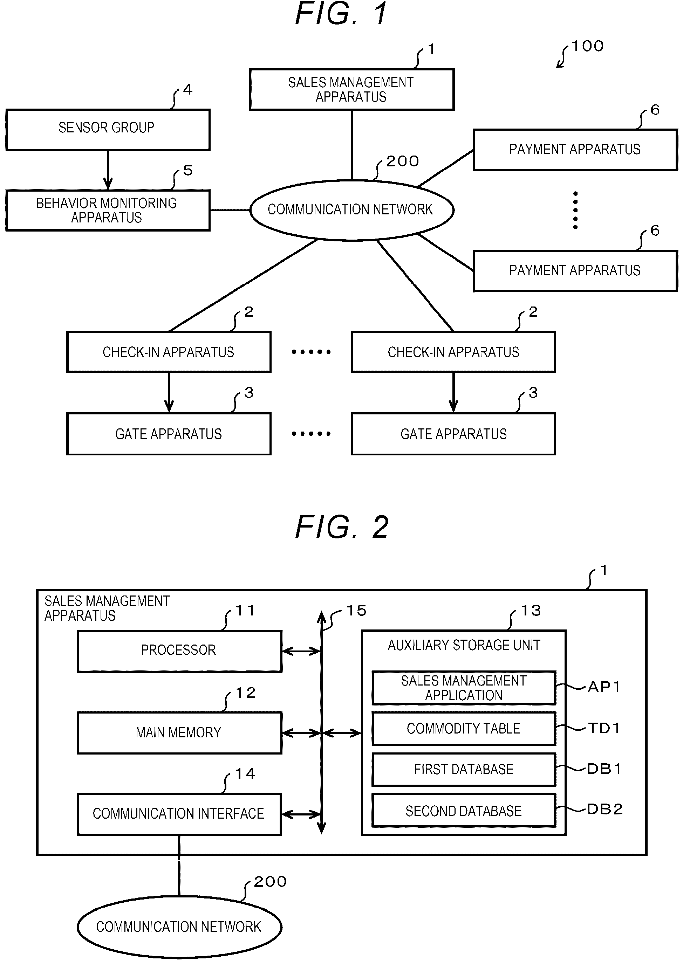

FIG. 1 is a block diagram illustrating a schematic configuration of a store management system 100 according to the present embodiment.

The store management system 100 performs an information process for selling a commodity in a store that sells a commodity displayed on a sales floor (for example, a commodity shelf, a display case, a display stand, and the like). The store management system 100 is configured such that a sales management apparatus 1, a check-in apparatus 2, a gate apparatus 3, a sensor group 4, a behavior monitoring apparatus 5, and a payment apparatus 6 can communicate with each other through a communication network 200. The store management system 100 typically includes a plurality of the check-in apparatuses 2, a plurality of the gate apparatuses 3, and a plurality of the payment apparatuses 6. However, the store management system 100 may include only one check-in apparatus 2, one gate apparatus 3, or one payment apparatus 6.

The Internet, a virtual private network (VPN), a local area network (LAN), a public communication network, a mobile communication network, or the like is used alone or in combination as appropriate, as the communication network 200.

The sales management apparatus 1 registers a purchased commodity by a customer based on a monitoring result by the behavior monitoring apparatus 5. The sales management apparatus 1 performs the registration until the customer leaves a store after check-in by the check-in apparatus 2 is completed. The sales management apparatus 1 requests the payment apparatus 6 to pay a price of the purchased commodity.

The check-in apparatus 2 accepts a check-in procedure for the customer to enter the store.

In the present embodiment, one gate apparatus 3 is provided for one check-in apparatus 2. The gate apparatus 3 selectively forms an opening state that allows the customer to enter the store and a closed state that prevents the customer from entering the store under an instruction from the check-in apparatus 2 that makes a pair. For example, a known device that opens and closes a door that closes a passage can be used as the gate apparatus 3. The gate apparatus 3 has a function of detecting passing of the customer.

The sensor group 4 includes many sensors arranged in the store. Each of the many sensors detects a behavior of the customer and a display status of the commodities. The sensor is, for example, a camera, an optical sensor, an infrared sensor, a temperature sensor, or a weight sensor.

The behavior monitoring apparatus 5 monitors the behavior of the customer and the display status of the commodities based on the detection result of the sensor group 4.

The payment apparatus 6 performs a payment process of calculating the amount of prices relating to the purchased commodity by the customer and a settlement process of settling the price.

FIG. 2 is a block diagram illustrating a main circuit configuration of the sales management apparatus 1.

The sales management apparatus 1 includes a processor 11, a main memory 12, an auxiliary storage unit 13, a communication interface 14, a transmission path 15, and the like. The processor 11, the main memory 12, the auxiliary storage unit 13, and the communication interface 14 are connected by the transmission path 15. The processor 11, the main memory 12, and the auxiliary storage unit 13 are connected by the transmission path 15 and configure a computer that performs an information process for controlling the sales management apparatus 1.

The processor 11 corresponds to a central portion of the computer. The processor 11 performs an information process for realizing various functions as the sales management apparatus 1 according to an information process program.

The main memory 12 corresponds to a main memory portion of the computer. The main memory 12 includes a nonvolatile memory region and a volatile memory region. The main memory 12 stores an information process program in the nonvolatile memory region. The main memory 12 may store data necessary for the processor 11 to perform an information process in the nonvolatile or volatile memory region. The main memory 12 uses the volatile memory region as a work area in which data is appropriately rewritten by the processor 11.

The auxiliary storage unit 13 corresponds to an auxiliary storage portion of the computer. For example, a well-known storage device such as an electric erasable programmable read-only memory (EEPROM), a hard disc drive (HDD) or a solid state drive (SSD) is used as the auxiliary storage unit 13 alone or in combination. The auxiliary storage unit 13 stores data used when the processor 11 performs various processes and data generated by the process in the processor 11. The auxiliary storage unit 13 may also store an information process program. One of the information process programs stored in the auxiliary storage unit 13 is an application program (hereinafter, referred to as a sales management application) AP1 for realizing a function as the sales management apparatus 1. The auxiliary storage unit 13 stores a commodity table TD1, a first database DB1, and a second database DB2. The commodity table TD1 is table data representing a list of purchased commodities of the customer in association with a transaction code assigned to the customer present in the store. In a status where a plurality of customers are present in the store, a plurality of commodity tables TD 1 are stored in the auxiliary storage unit 13. The first database DB1 is a set of record data associated with a customer. The record data is data obtained by integrating a list of the purchased commodity in the past transaction relating to the associated customer, payment data regarding a payment result, and the like. The second database DB2 is a set of record data associated with the customer. The record data is data in which data for managing a visit status of the associated customer is integrated. At least a part of the sales management application AP1, the commodity table TD1, the first database DB1, and the second database DB2 may be stored in the main memory 22.

The communication interface 14 is an interface for data communication through the communication network 200. For example, a known communication device for performing data communication through a LAN can be used as the communication interface 14.

The transmission path 15 includes an address bus, a data bus, a control signal line, and the like, and transmits data and a control signal exchanged between the respective connected units.

The sales management apparatus 1 uses, for example, a general-purpose computer apparatus as basic hardware. At this time, typically, the computer apparatus in a state where the sales management application AP1 is not stored in the auxiliary storage unit 13 and the sales management application AP1 are transmitted to a company or the like that uses the sales management apparatus 1 individually. The transmission of the sales management application AP1 can be realized by performing recording on a removable recording medium such as a magnetic disk, a magneto-optical disk, an optical disk, or a semiconductor memory, or by performing downloading through a network. In this case, the sales management application AP1 is written to the auxiliary storage unit 13 according to an operation by an administrator or a serviceman of the sales management apparatus 1. However, the sales management apparatus 1 in which the sales management application AP1 is stored in the auxiliary storage unit 13 of the computer apparatus may be transmitted to the above-described company or the like.

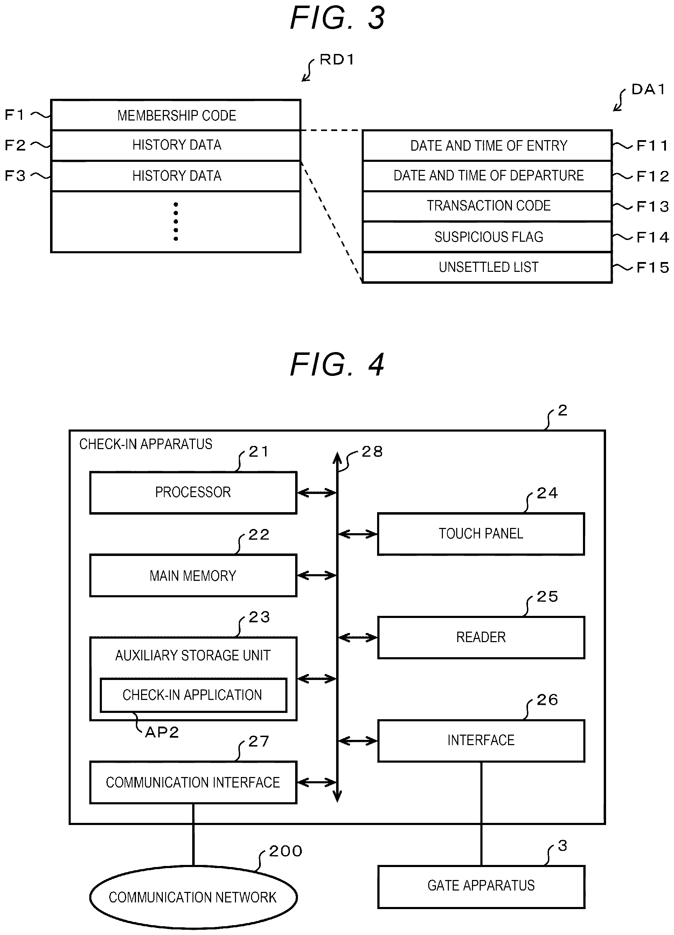

FIG. 3 is a diagram schematically illustrating a structure of the record data RD1 included in the second database DB2.

The record data RD1 is added to the second database DB2 according to a first visit of the associated customer. The record data RD1 includes a field F1 and a field F2 in an initial state. In the record data RD1, respective fields after a field F3 are sequentially added in accordance with second and subsequent visits of the associated customers.

In the field F1, a membership code for identifying an associated customer is set. History data DA1 is set in each field after the field F2. The history data DA1 is data for managing one visit of the customer. The history data DA1 includes fields F11, F12, F13, and F14. The history data DA1 may also include a field F15.

In the field F11, the date and time when the customer enters the store when visiting the management target store is set as date and time of entry. In the field F12, the date and time when the customer leaves the store when visiting a management target store is set as date and time of departure. In the field F13, a transaction code determined for visiting the store which is the management target is set. In the field F14, a suspicious flag indicating whether or not there is a possibility that the customer takes out an unsettled commodity when visiting the management target store is set. A behavior of a customer who may take out the unsettled commodity is hereinafter referred to as a suspicious behavior. An unsettled list is set in the field F15. The unsettled list will be described below.

FIG. 4 is a block diagram illustrating a main circuit configuration of the check-in apparatus 2.

The check-in apparatus 2 includes a processor 21, a main memory 22, an auxiliary storage unit 23, a touch panel 24, a reader 25, an interface 26, a communication interface 27, and a transmission path 28. The processor 21, the main memory 22, the auxiliary storage unit 23, the touch panel 24, the reader 25, the interface 26 and the communication interface 27 are connected by the transmission path 28. The processor 21, the main memory 22, and the auxiliary storage unit 23 are connected by the transmission path 28 and configure a computer that performs an information process for controlling the check-in apparatus 2.

The processor 21 corresponds to a central portion of the computer. The processor 21 performs an information process for realizing various functions as the check-in apparatus 2 according to an information process program.

The main memory 22 corresponds to a main memory portion of the computer. The main memory 22 includes a nonvolatile memory region and a volatile memory region. The main memory 22 stores an information process program in the nonvolatile memory region. The main memory 22 may store data necessary for the processor 21 to perform an information process in the nonvolatile or volatile memory region. The main memory 22 uses the volatile memory region as a work area in which data is appropriately rewritten by the processor 21.

The auxiliary storage unit 23 corresponds to an auxiliary storage portion of the computer. For example, a known storage device such as an EEPROM, a HDD, or a SSD is used as the auxiliary storage unit 23 alone or in combination. The auxiliary storage unit 23 stores data used when the processor 21 performs various processes and data generated by the process in the processor 21. The auxiliary storage unit 23 may store an information process program. One of the information process programs stored in the auxiliary storage unit 23 is an application program (hereinafter, referred to as a check-in application) AP2 for realizing a function as the check-in apparatus 2.

The touch panel 24 displays a screen for presenting various types of information to an operator. The touch panel 24 receives data designated by a touch operation performed by the operator. In many cases, the operator of the check-in apparatus 2 is a customer. However, a store clerk may be the operator.

The reader 25 reads a membership code presented by a customer. For example, an optical two-dimensional barcode reader is used as the reader 25.

The gate apparatus 3 is connected to the interface 26. The interface 26 outputs data for an opening command, a closing command, and the like transmitted from the processor 21 to the gate apparatus 3.

The communication interface 27 is an interface for data communication through the communication network 200. For example, a known communication device for communicating the data through a LAN can be used as the communication interface 27.

The transmission path 28 includes an address bus, a data bus, a control signal line, and the like, and transmits data and a control signal exchanged between the respective connected units.

The check-in application AP2 is typically stored in the auxiliary storage unit 23 when the check-in apparatus 2 is transmitted to a company that uses the check-in apparatus. However, hardware of the check-in apparatus 2 and the check-in application AP2 may be individually transmitted to the company that uses the check-in apparatus 2 or the like. In this case, the transmission of the check-in application AP2 can be realized by performing recording on a removable recording medium such as a magnetic disk, a magneto-optical disk, an optical disk, or a semiconductor memory, or by performing downloading through a network. In this case, the check-in application AP2 is written to the auxiliary storage unit 23 according to an operation performed by an administrator, a serviceman or the like of the check-in apparatus 2. The check-in application AP2 may be stored in the main memory 22.

Next, an operation of the store management system 100 configured as described above will be described.

A customer who shops at a store managed by the store management system 100 completes membership registration and receives a membership code. The membership code is managed by a member server (not illustrated) connected to, for example, the communication network 200. However, management of the membership code may be made by the sales management apparatus 1, the behavior monitoring apparatus 5, or any other device. The membership code may be stored in the main memory 22 or the auxiliary storage unit 23.

A customer who wants to enter the store places a barcode representing the membership code on the reader 25 of the check-in apparatus 2. For example, the customer places the barcode representing the membership code on an information terminal such as a smartphone carried by the customer, and thereafter, puts the barcode on the reader 25. The reader 25 reads the placed bar code and acquires the membership code shown there. The barcode is preferably subjected to a known process for preventing fraud due to forgery. Accordingly, it is assumed that a two-dimensional code is used as the barcode. However, a one-dimensional code or any other type can be used as the barcode. The membership code may be formed in a membership card. The reader 25 may acquire the membership code by a non-contact communication, a contact communication, magnetic reading, or a manual input by a customer. The reader 25 may read a face or a fingerprint of a customer, and authenticate the customer using a biometric authentication technology such as a face authentication or a fingerprint authentication. In this case, the membership code stored in the auxiliary storage unit 13 or any other storage device in association with the data for the face authentication or the fingerprint authentication is read. A device suitable for the technology to be applied is used as the reader 25.

Thus, when being in an operation state in which a procedure for check-in is to be performed, the processor 21 in the check-in apparatus 2 performs an information process (hereinafter, referred to as a check-in process) which will be described below according to the check-in application AP2.

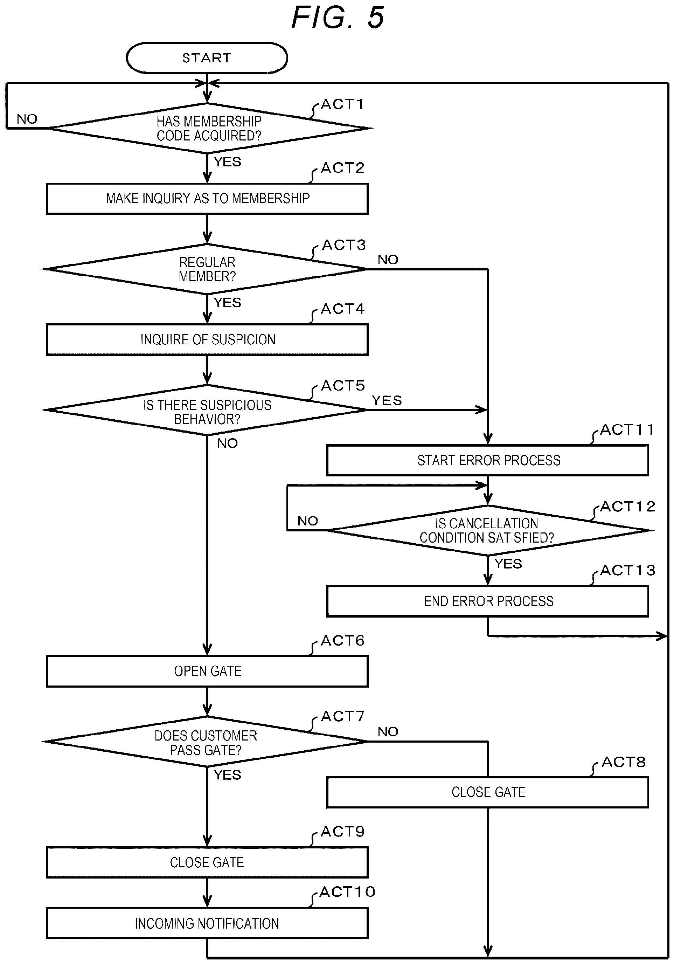

FIG. 5 is a flowchart of the check-in process performed by the processor 21. Content of the check-in process which will be described below is an example, and it is possible to appropriately perform a change of an order of some process, omission of some process, addition of other processes, and the like.

As Act 1, the processor 21 stands by for a membership code to be acquired. If the membership code is acquired by the reader 25 as described above, the processor 21 determines YES and proceeds to Act 2.

As Act 2, the processor 21 makes an inquiry as to whether the membership code acquired by the reader 25 as described above is a membership code of a regular member to a server device or the like that manages the membership code. For example, the processor 21 transmits inquiry data for the inquiry from the communication interface 27 to the communication network 200 addressed to the server device or the like. The processor 21 includes, in the inquiry data, the membership code acquired by the reader 25 and a predetermined command as representing the inquiry of the member. The inquiry data is transmitted by the communication network 200 to a server device or the like which is set as a destination. The server device or the like confirms whether or not the membership code included in the inquiry data is a membership code of a regular member. The server device or the like transmits notification data including result data representing the confirmation result to the communication network 200 addressed to the check-in apparatus 2 of the inquiry source.

As Act 3, the processor 21 confirms whether or not the member identified by the membership code acquired by the reader 25 is a regular member. That is, if the notification data transmitted through the communication network 200 is received by the communication interface 27, the processor 21 confirms the result data included in the notification data. If the result data indicates that the member is a regular member, the processor 21 determines YES and proceeds to Act 4.

As described above, the processor 21 determines a customer who enters the store. Thus, as the processor 21 performs the information process based on the check-in application AP2, a computer having the processor 21 as a central portion functions as a first determination unit.

As Act 4, the processor 21 inquires of the sales management apparatus 1 whether or not there was any suspicious behavior in the past for the member identified by the membership code acquired by the reader 25. For example, the processor 21 transmits inquiry data for the inquiry from the communication interface 27 to the communication network 200 addressed to the sales management apparatus 1. The processor 21 includes, in the inquiry data, the membership code acquired by the reader 25 and a predetermined command as representing inquiry of a suspicious behavior. The inquiry data is transmitted to the sales management apparatus 1 through the communication network 200. In the sales management apparatus 1, if the inquiry data transmitted through the communication network 200 is received by the communication interface 14, the processor 11 responds to the inquiry of the inquiry data. Details of the response process will be described below. The processor 11 transmits the notification data including the result data representing presence or absence of the suspicious behavior through the response process to the communication network 200 addressed to the check-in apparatus 2 of the inquiry source.

As Act 5, the processor 21 confirms whether or not there was any suspicious behavior in the past for the member identified by the membership code acquired by the reader 25. That is, if the notification data transmitted through the communication network 200 is received by the communication interface 27, the processor 21 confirms the result data included in the notification data. If the result data indicates that there is no suspicious behavior, the processor determines NO and proceeds to Act 6.

As Act 6, the processor 21 brings the gate apparatus 3 in a closing state into an opening state. For example, the processor 21 transmits an opening command to the gate apparatus 3 connected to the interface 26 through the interface 26. If the opening command is received, the gate apparatus 3 is opened. Thereby, a customer is allowed to enter the store. The customer enters the store through the gate apparatus 3 that is in the opening state. At this time, the gate apparatus 3 detects passing of the customer and notifies the check-in apparatus 2 of the passing.

As Act 7, the processor 21 confirms whether or not the customer passes a gate. If the passing is not notified from the gate apparatus 3 as described above until the predetermined standby time elapses while the gate apparatus 3 is in the opening state in Act 6, the processor 21 determines NO and proceeds to Act 8.

As Act 8, the processor 21 brings the gate apparatus 3 into the closing state. For example, the processor 21 transmits a closing command to the gate apparatus 3 connected to the interface 26 via the interface 26. If the closing command is received, the gate apparatus 3 enters the closing state.

If the passing is notified from the gate apparatus 3 as described above before the predetermined standby time elapses while the gate apparatus 3 is open in Act 6, the processor 21 determines YES in Act 7, and proceeds to Act 9.

As Act 9, the processor 21 brings the gate apparatus 3 into the closing state. For example, the processor 21 transmits a closing command to the gate apparatus 3 connected to the interface 26 via the interface 26. If the closing command is received, the gate apparatus 3 enters the closing state.

As Act 10, the processor 21 transmits an incoming notification for notifying that the customer entered the store to the sales management apparatus 1 and the behavior monitoring apparatus 5. For example, the processor 21 transmits notification data for the notification from the communication interface 27 to the communication network 200 addressed to the sales management apparatus 1 and the behavior monitoring apparatus 5. The processor 21 includes, in the notification data, the membership code acquired by the reader 25 and a predetermined command as representing a notification that a customer entered the store. The notification data is transmitted to the sales management apparatus 1 and the behavior monitoring apparatus 5 through the communication network 200.

If Act 8 or Act 10 ends, the processor 21 returns to a standby state of Act 1. That is, the processor 21 prepares for a next customer who wants to enter the store.

If notification data for incoming notification is received from the check-in apparatus 2, the behavior monitoring apparatus 5 performs an information process (hereinafter, referred to as a monitoring process) for monitoring a behavior of the customer identified by the membership code included in the notification data. For example, the behavior monitoring apparatus 5 specifies a customer who passed through the gate apparatus 3 right before which pairs with the check-in apparatus 2 made the incoming notification, based on an image captured by a camera included in the sensor group 4. Then, a movement of the customer, an operation of the customer taking out the commodity from the sales floor, an operation of the customer returning the commodity to the sales floor, and the like are monitored. The behavior monitoring apparatus 5 monitors a display status of the commodity on the sales floor based on the detection results of cameras and other sensors included in the sensor group 4, and determines the commodity taken out or returned when the commodity is taken out from the sales floor or returned to the sales floor. The behavior monitoring apparatus 5 determines a customer who performed a predetermined behavior such as moving from an exit to the outside of the store. That is, the behavior monitoring apparatus 5 has a function as a second determination unit. If the customer takes out the commodity from the sales floor, the behavior monitoring apparatus 5 notifies the sales management apparatus 1 of the taking-out. For example, the behavior monitoring apparatus 5 transmits notification data including the membership code of the customer, a commodity code of the taken out commodity, and a predetermined command as representing a notification of the taking-out, to the communication network 200 addressed to the sales management apparatus 1. If the customer returns the commodity to the sales floor, the behavior monitoring apparatus 5 notifies the sales management apparatus 1 of the return. For example, the behavior monitoring apparatus 5 transmits notification data including the membership code of the customer, the commodity code of the returned commodity, and a predetermined command as representing a notification of the return, to the communication network 200 addressed to the sales management apparatus 1. If it is determined that the customer leaves the store, the behavior monitoring apparatus 5 notifies the sales management apparatus 1 that the customer left the store. For example, the behavior monitoring apparatus 5 transmits notification data including the membership code of the customer and a predetermined command as representing notification of leaving the store to the communication network 200 addressed to the sales management apparatus 1. The monitoring process is randomly realized by the information process and can be performed by using an existing technology which uses, for example, an artificial intelligence (Al) technology. The behavior monitoring apparatus 5 performs a monitoring process relating to the customer until it can be determined that the customer which is a monitoring target left the store. In a status where a plurality of customers are present in the store, the behavior monitoring apparatus 5 performs the monitoring process in parallel for each of the plurality of customers. The monitoring process relating to the plurality of customers may be distributed by the plurality of behavior monitoring apparatuses 5.

If the above-described notification data transmitted for incoming notification from the check-in apparatus 2 is transmitted to the sales management apparatus 1 through the communication network 200, the communication interface 14 receives the notification data and assigns the notification data to the processor 11. By doing so, the processor 11 performs the information process (hereinafter, referred to as a sales management process) which will be described below for a sales management according to the sales management application AP1.

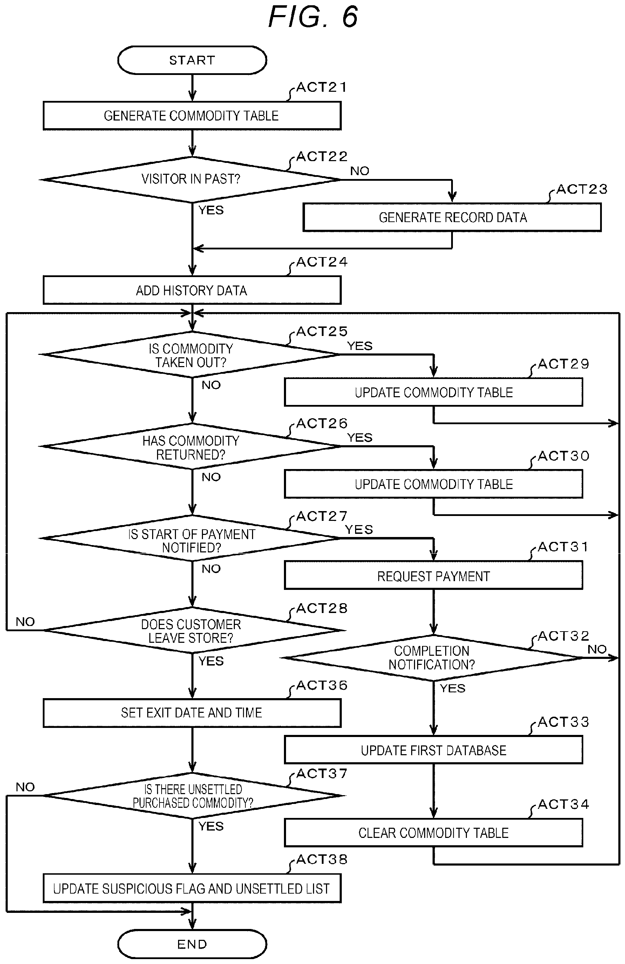

FIG. 6 is a flowchart of the sales management process performed by the processor 11. In a status where a plurality of customers are present in the store, the processor 11 performs the sales management process in parallel for each of the plurality of customers. Thus, single sales management process is a process of managing shopping performed by one customer. In the following description on the sales management process, one customer who is a target of such management is referred to as a target customer. A plurality of sales management processes may be distributed by a plurality of processors included in the sales management apparatus 1. Alternatively, a plurality of sales management apparatuses 1 are provided, and the plurality of sales management processes may be distributed by the plurality of sales management apparatuses 1. Content of the sales management process which will be described below is an example, and it is possible to appropriately perform a change of an order of some process, omission of some process, addition of other processes, or the like.

As Act 21, the processor 11 generates a new commodity table TD1. For example, the processor 11 determines such that a transaction code for identifying a transaction which becomes a target (hereinafter, referred to as a target transaction) managed by the sales management process does not overlap a transaction code previously assigned to another transaction. For example, the processor 11 generates a new commodity table TD1 as the commodity table TD1 associated with the transaction code determined in this way. Since being a target of process in the sales management process, the new commodity table TD1 will be referred to as a target commodity table TD1 below.

As Act 22, the processor 11 confirms whether or not the target customer visited the store in the past. For example, if the record data RD1 in which a membership code of the target customer is set in the field F1 is not included in the second database DB2, the processor 11 determines NO and proceeds to Act 23.

As Act 23, the processor 11 generates new record data RD1, and adds this record data RD1 to the second database DB2. The processor 11 sets the membership code of the target customer in the field F1 of the new record data RD1. The processor 11 does not include the field F2 and subsequent fields in the new record data RD1.

The processor 11 proceeds from Act 23 to Act 24. For example, if the record data RD1 in which the membership code of the target customer is set in the field F1 is previously included in the second database DB2, the processor 11 determines YES in Act 22, passes Act 23, and proceeds to Act 24.

As Act 24, the processor 11 adds a field in which new history data DA1 is set after a last field of the record data RD1 in which the membership code of the target customer is set in the field F1. The processor 11 sets, for example, current date and time in the field F11 of the new history data DA1 as entry date and time. The entry date and time may be date and time when the membership code is acquired by the reader 25 of the check-in apparatus 2. The entry date and time may be the date and time when the processor 21 of the check-in apparatus 2 determines YES in Act 3 of FIG. 5. The entry date and time may be the date and time when the processor 21 determines YES in Act 7. That is, the entry date and time may roughly represent the timing when the target customer enters the store. The processor 11 sets an invalid value in the field F12 of the new history data DA1. The invalid value is previously determined as a value that does not represent specific date and time, for example, by a designer or the like of the sales management apparatus 1. The processor 11 sets the transaction code determined in the Act 21 in the field F13 of the new history data DA1. The processor 11 sets a suspicious flag in a state indicating that there is no suspicious behavior in the field F14 of the new history data DA1. The processor 11 does not include the unsettled list in the new history data DA1.

As Act 25, the processor 11 confirms whether or not the target customer takes out the commodity to be purchased from the sales floor. If it is not possible to confirm that the target customer performs the corresponding behavior, the processor 11 determines NO and proceeds to Act 26.

As Act 26, the processor 11 confirms whether or not the target customer returns the commodity to the sales floor. If it is not possible to confirm that the target customer performs the corresponding behavior, the processor 11 determines NO and proceeds to Act 27.

As the Act 27, the processor 11 confirms whether or not start of payment is notified. If it is not possible to confirm that the notification is made, the processor 11 determines NO and proceeds to Act 28.

As Act 28, the processor 11 confirms whether or not it is determined that the target customer leaves the store. If it is not possible to confirm that the corresponding determination is made, the processor 11 determines NO and returns to Act 25.

Thus, as for Act 25 to Act 28, the processor 11 takes out the commodity, returns the commodity or request payment but stands by for the target customer to be determined to leave the store.

For example, if the notification data transmitted from the behavior monitoring apparatus 5 is received by the communication interface 27 so as to notify the taking-out, the processor 11 determines YES in Act 25 and proceeds to Act 29.

As Act 29, the processor 11 updates the target commodity table TD1. That is, the processor 11 updates the target commodity table TD1 such that the commodity code included in the notification data for notifying the above-described extraction is included as the commodity code of the purchased commodity. Thereafter, the processor 11 returns to a standby state of Act 25 to Act 28.

For example, if the notification data transmitted from the behavior monitoring apparatus 5 is received by the communication interface 27 so as to notify the return, the processor 11 determines YES in Act 26 and proceeds to Act 30.

As Act 30, the processor 11 updates the target commodity table TD1. That is, the processor 11 updates the target commodity table TD1 such that the commodity code included in the notification data for notifying the return is excluded from the commodity code of the purchased commodity. Thereafter, the processor 11 returns to the standby state of Act 25 to Act 28.

Thus, if the commodity code is included in the target commodity table TD1, it is determined that the target customer carries the commodity. That is, the processor 11 monitors that the customer carries the commodity by updating the target commodity table TD1 as described above. Therefore, as the processor 11 performs an information process based on the sales management application AP1, a computer having the processor 11 as a central portion functions as a monitoring unit.

Thus, if picking up all the purchased commodities is finished, the customer performs a predetermined operation for instructing any payment apparatus 6 to make payment. The operation is, for example, an operation for causing the payment apparatus 6 to acquire a membership code of the target customer. The payment apparatus 6 acquires the membership code according to the above-described operation. Then, the payment apparatus 6 transmits notification data including the membership code and a predetermined command as representing start of payment to the communication network 200 addressed to the sales management apparatus 1.

In the sales management apparatus 1, if the notification data is transmitted through the communication network 200 and received by the communication interface 14, the processor 11 determines YES in Act 27 of the sales management process in which the customer identified by the membership code included in the notification data is a target customer, and proceeds to Act 31.

As Act 31, the processor 11 requests payment to the payment apparatus 6 that transmits the notification data of payment start. For example, the processor 11 transmits request data for the request from the communication interface 14 to the communication network 200 addressed to the corresponding payment apparatus 6. The processor 21 includes the target commodity table TD1 and a predetermined command as representing the payment request in the request data. The request data is transmitted through the communication network 200 to the destination payment apparatus 6. If the request data is received, the payment apparatus 6 performs a payment process. The payment process is for calculating a price for all purchased commodities shown in the commodity table TD1 included in the request data, and for settlement of the price. The processor 11 basically calculates the sum of unit prices of all purchased commodities as a price. However, the processor 11 may reduce the price or discount the unit price or the sum of the unit prices as necessary. The processor 11 performs settlement by applying settlement media such as cash, a credit card, a debit card, a prepaid card, electronic money, points, and cash voucher alone or in combination as the price. However, calculation of the price may be performed by the sales management apparatus 1. For the above-described payment process, for example, the same process performed by a payment apparatus in an existing semi-self checkout system can be used as it is. If the payment is completed, the payment apparatus 6 transmits the notification data for a completion notification to the communication network 200 addressed to sales management apparatus 1. The sales management apparatus 1 includes the payment data relating to the payment result in the notification data. The payment data represents, for example, the settled money amount, the applied settlement media, and the like. The payment data represents information on the result of settlement according to the applied settlement media. The information includes, for example, a deposit amount and a change amount for cash settlement. If the payment cannot be completed for some reason, the payment apparatus 6 transmits notification data for a failure notification to the communication network 200 addressed to the sales management apparatus 1.

Thus, the payment apparatus 6 has a function as a settlement unit that settles a price of the commodity monitored to be carried by the customer according to an instruction from the customer.

Thus, in the sales management apparatus 1, the processor 11 proceeds to Act 32 after requesting the payment in Act 31 of FIG. 6.

As Act 32, the processor 11 stands by for a notification from the payment apparatus 6 requested the payment. If the notification data transmitted from the payment apparatus 6 as described above is transmitted through the communication network 200 and received by the communication interface 14, the processor 11 confirms whether or not the notification data is a completion notification. For example, if the notification data for a completion notification is received, the processor 11 determines YES and proceeds to Act 33.

As Act 33, the processor 11 updates the first database DB1. For example, the processor 11 adds record data including a list of purchased commodities represented by the target commodity table TD1 and payment data included in the notification data to the first database DB1.

As Act 34, the processor 11 clears the target commodity table TD1. For example, the processor 11 rewrites the target commodity table TD1 into a state in which no purchased commodity is included. Thereafter, the processor 11 returns to the standby state of Act 25 to Act 28. That is, the processor 11 allows the target customer to return to the sales floor after completing the payment and to make additional shopping.

For example, if the notification data for a failure notification is received, the processor 11 determines NO in Act 32, passes Act 33 and Act 34, and returns to the standby state of Act 25 to Act 28.

Thus, after the payment is finished by the payment apparatus 6, the customer leaves the store if there is no need for additional shopping. However, there is a possibility that the customer who does not finishes the payment leaves the store. The customer may also leave the store without picking up any commodity, and thus, payment is not made. Regardless of any case, For example, if the notification data transmitted from the behavior monitoring apparatus 5 is received by the communication interface 27 in order to notify that it is determined that the target customer leaves the store, the processor 11 determines YES in Act 28 and proceeds to Act 36.

As Act 36, the processor 11 sets, for example, current date and time as exit date and time in the field F12 of the history data DA1 added to the second database DB2 in Act 24. The exit date and time may be date and time when the behavior monitoring apparatus 5 determines that the target customer leaves the store. That is, the exit date and time may roughly represent the timing at which the target customer leaves the store.

As Act 37, the processor 11 confirms whether or not there is an unsettled purchased commodity. For example, if the purchased commodity is shown in the commodity table TD1 relating to the target customer, the processor 11 determines YES and proceeds to Act 38.

As Act 38, the processor 11 updates the suspicious flag set in the field F14 of the history data DA1 added to the second database DB2 in Act 24 to a state indicating that there is a suspicious behavior. The processor 11 adds the field F15 to the history data DA1 added to the second database DB2 in Act 24 and sets a list of the purchased commodities shown in the target commodity table TD1 as an unsettled list in the field F15. Thereafter, the processor 11 ends the sales management process.

The history data DA1 is associated with a membership code as an identification code for identifying a customer. The history data DA1 includes a suspicious flag as suspicious data indicating that the customer has a suspicious behavior. Thus, as the processor 11 performs the information process based on the sales management application AP1, the computer having the processor 11 as a central portion functions as a generation unit that generates the history data DA1. The auxiliary storage unit 13 stores a plurality of pieces of the history data DA1 for the same customer and is an example of a storage unit.

For example, if the purchased commodity is not shown in the target commodity table TD1, the processor 11 determines NO in Act 37, passes Act 38, and ends the sales management process.

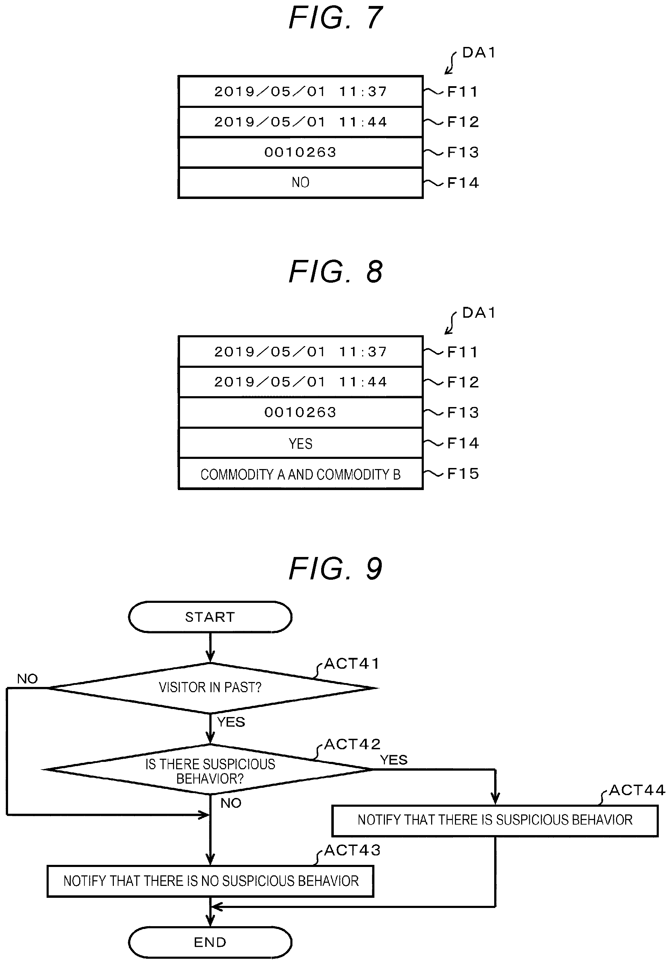

FIG. 7 is a diagram illustrating an example of the history data DA1 when the target customer leaves the store in a state where there is no unsettled purchased commodity.

In the history data DA1 illustrated in FIG. 7, the suspicious flag set in the field F14 is left in a state indicating that there is no suspicious behavior, and the history data does not include the field F15.

FIG. 8 is a diagram illustrating an example of the history data DA1 when the target customer leaves the store in a state where there is an unsettled purchased commodity.

In the history data DA1 illustrated in FIG. 8, the suspicious flag set in the field F14 is changed to a state indicating that there is a suspicious behavior, and an unsettlement list indicating that commodity A and commodity B are unsettled is set in the field F15.

Next, the above-described response process will be described.

If inquiry data transmitted from the processor 21 of the check-in apparatus 2 to the communication network 200 in Act 4 of FIG. 5 is received by the communication interface 14, the processor 11 performs a response process which will be described below according to the sales management application AP1.

FIG. 9 is a flowchart of the response process performed by the processor 21. Content of the response process which will be described below is an example, and it is possible to appropriately perform a change of an order of some process, omission of some process, addition of another process, and the like.

As Act 41, the processor 11 confirms whether or not the customer who is an inquiry target visited the store in the past. For example, if the record data RD1 (hereinafter, referred to as the target record RD1) associated with the customer who is the inquiry target is included in the second database DB2, the processor 11 determines that the customer who is the inquiry target visited the store in the past. More specifically, the processor 11 searches for the target record RD1 as the record data RD1 in which the membership code included in the inquiry data is set in the field F1. If the target record RD1 is found, the processor 11 determines YES and proceeds to Act 42.

As Act 42, the processor 11 confirms whether or not there was a suspicious behavior in the previous visit for the customer who is the inquiry target. For example, the processor 11 selects the history data DA1 with the latest exit date and time set in the field F12 from the history data DA1 included in the target record RD1. In the present embodiment, since the date and time of the history data DA1 located at the end of one piece of the record data RD1 is the latest, the processor 11 may select the history data DA1 located at the end of the target record RD1. If the suspicious flag in a state indicating that there is no suspicious behavior is set in the field F14 of the selected history data DA1, the processor 11 determines NO, and proceeds to Act 43. For example, when the target record RD1 is not found, the processor 11 determines NO in Act 41 and proceeds to Act 43.

As Act 43, the processor 11 notifies the check-in apparatus 2 of an inquiry source that there is no suspicious behavior. For example, the processor 11 transmits notification data including result data indicating that there is no suspicious behavior from the communication interface 14 to the communication network 200 addressed to the check-in apparatus 2 of the inquiry source.

If the suspicious flag in a state indicating that there is the suspicious behavior is set in the field F14 of the selected history data DA1, the processor 11 determines YES in Act 42 and proceeds to Act 44.

As Act 44, the processor 11 notifies the check-in apparatus 2 of the inquiry source that there is the suspicious behavior. For example, the processor 11 transmits notification data including result data indicating that there is the suspicious behavior from the communication interface 14 to the communication network 200 addressed to the check-in apparatus 2 of the inquiry source.

If the notification in Act 43 or Act 44 ends, the processor 11 ends the response process.

In the check-in apparatus 2, if the notification data including the result data indicating that there is no suspicious behavior is received by the communication interface 27, the processor 21 proceeds from Act 5 to Act 6 of FIG. 5 as described above. However, if the notification data including the result data indicating that there is suspicious behavior is received by the communication interface 27, the processor 21 determines YES in Act 5 and proceeds to Act 11. If it is indicated that there is no result data included in the notification data for a member inquiry in a regular member, the processor 21 determines NO in Act 3 and proceeds to Act 11.

As Act 11, the processor 21 starts an error process. The error process is for preventing a customer from entering the store as it is. In the error process, the processor 21 does not cause at least the gate apparatus 3 to enter an opening state. For example, the processor 21 may perform a predetermined calling process for calling a store clerk. The calling process is, for example, a notification to a mobile terminal carried by the store clerk. The calling process is, for example, a control process for providing an alarm buzzer and a patrol lamp to the check-in apparatus 2, and for sounding and lighting the alarm buzzer and the patrol lamp. Thus, as the processor 21 performs an information process based on the check-in application AP2, the computer having the processor 21 as a central portion functions as an alarm unit.

For example, the store clerk performs a confirmation work according to a procedure determined in the store and performs a predetermined operation for canceling an error.

As Act 12, the processor 21 stands by for the error cancellation condition to be satisfied. For example, if the cancellation condition is satisfied such as performing a predetermined operation on the touch panel 24 which is performed by the store clerk for error cancellation, the processor 21 determines YES and proceeds to Act 13.

The processor 21 ends the error process as Act 13. Thereafter, the processor 21 returns to the standby state of Act 1.

As described above, according to the store management system 100, when settlement for the commodity managed as being carried by a customer determined to leave the store is not completed, this is recorded by a suspicious flag. Thus, it is possible to manage a behavior that may cause a customer to take out the commodity for which settlement is not completed as a suspicious behavior of the customer. However, when there is a possibility of a false detection in the monitoring process of the behavior monitoring apparatus 5, the customer does not actually carry the commodity managed as being carried by the customer, and fraud by a customer cannot be managed.

According to the store management system 100, presence or absence of a suspicious behavior for each visit is recorded by each suspicious flag. Thus, when the same customer repeats a suspicious behavior, the state can be managed. When the same customer repeats the suspicious behavior, there is a high possibility that the customer makes illegality. That is, when the same customer repeats the suspicious behavior, being able to manage the state leads to managing the illegality of the customer.

According to the store management system 100, when the settlement of the commodity managed to be carried by a customer determined to leave the store is not completed, a list of the corresponding commodity is recorded. Thus, it is possible to manage the commodity that may be illegally carried out by a customer.

The present embodiment can be modified in various ways as follows.

The behavior monitoring apparatus 5 may determine that a customer enters the store. For example, the behavior monitoring apparatus 5 may determine that the customer enters the store when a movement of the customer into the store through the gate apparatus 3 is detected.

The behavior monitoring apparatus 5 may determine a customer who enters the store. For example, the behavior monitoring apparatus 5 may determine the customer by performing face authentication from an image obtained by imaging a face of the customer moving through the gate apparatus 3 into the store by using a camera. In this case, the check-in apparatus 2 can be omitted. When the check-in apparatus 2 is omitted, the gate apparatus 3 may be controlled by, for example, the behavior monitoring apparatus 5 or the sales management apparatus 1.

The monitoring process may be performed by the sales management apparatus 1.

The gate apparatus 3 may not be provided. As a customer, who is recorded as having a suspicious behavior at the previous visit, enters the store, the store management system 100 may not take any action. Alternatively, as the customer, who is recorded as having the suspicious behavior at the previous visit, enters the store, other random action such as issuing an alarm in a room where a guard is stationed may be taken by the store management system 100.

Registration of the purchased commodity in the commodity table may be performed according to an operation of the customer, for example, in an information terminal carried by the customer or an information terminal attached to a shopping cart. In this case, the commodity table may be managed by the information terminal. In this case, the behavior monitoring apparatus 5 may not monitor a behavior of the customer. However, since there is a possibility that the commodity carried by the customer may not be correctly registered as a purchased commodity, it is preferable to monitor the behavior of the customer by using the behavior monitoring apparatus 5.

The registration of the purchased commodity in the commodity table may be performed according to an operation of the customer on the payment apparatus 6. However, in this case, the payment apparatus 6 needs to have a function of registering the purchased commodity. For example, an existing self-checkout POS terminal can be used as the payment apparatus 6. In this case, since there is a high risk that the commodity carried by the customer is not correctly registered as the purchased commodity, the behavior monitoring apparatus 5 has to monitor the behavior of the customer.

In any of the above cases, the behavior monitoring apparatus 5 may only monitor whether or not the customer carries the commodity without determining the commodity carried by the customer. When a customer carrying the commodity leaves the store without making a settlement, the sales management apparatus 1 may determine the case as a suspicious behavior. However, it is more desirable for the behavior monitoring apparatus 5 to monitor the number of commodities carried by the customer. When the number of commodities paid by the customer is smaller than the number of commodities monitored by the behavior monitoring apparatus 5, the sales management apparatus 1 can determine that the customer carries an unsettled commodity.

That is, if the customer carrying the unsettled commodity leaves the store, the sales management apparatus 1 may determine the leaving of the customer as a suspicious behavior of the customer.

The record data RD1 may include only one piece of history data DA1 relating to the latest visit. In this case, entry date and time, exit date and time, and a transaction code may not be included in the record data RD1.

The history data DA1 may not include an unsettlement list.

A part or all of the respective functions realized by the processors 11 and 21 through an information process can also be realized by hardware performing the information process that is not based on a program such as a logic circuit. Each of the above functions can also be realized by combining software control with the hardware such as the logic circuit.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A store management system comprising:
a first determination unit configured to determine a customer who enters a store that displays and sells a commodity;
a monitoring unit configured to monitor that the customer determined by the first determination unit carries the commodity;
a settlement unit configured to settle a price of the commodity which is monitored by the monitoring unit as being carried by the customer, according to an instruction from the customer;
a second determination unit configured to determine that the customer leaves the store; and
a generation unit configured to generate history data including suspicious data indicating that the customer, identified by an identification code, is associated with an unsettled commodity being carried out of the store, when a settlement of the commodity carried by the customer which is determined by the second determination unit as leaving the store has not been completed by the settlement unit.

2. The system according to claim 1, further comprising:
a storage unit configured to store each of a plurality of pieces of history data generated for the same customer by the generation unit.

3. The system according to claim 1 or 2, wherein the generation unit includes, in the history data, information regarding a commodity that has been monitored by the monitoring unit and determined to be unsettled by the settlement unit.

4. The system according to any one of claims 1 to 3, further comprising:
an alarm unit configured to issue an alarm when a customer associated with the suspicious data included in the history data visits the store.

5. The system according to any one of claims 1 to 4, wherein the history data further includes a date and time when the customer enters the store, and a date and time when the customer leaves the store.

6. The system according to any one of claims 1 to 5, wherein the monitoring unit is configured to communicate with at least one of a plurality of sensors to monitor that the customer, each of the plurality of sensors configured to detect a behavior of the customer and a display status of the commodity.

7. The system according to any one of claims 1 to 6, wherein the second determination unit is configured to communicate with at least one of a plurality of sensors to determine that the customer leaves the store, each of the plurality of sensors configured to detect a behavior of the customer and a display status of the commodity.

8. A store management method comprising:
determining a customer who enters a store that displays and sells a commodity;
monitoring that the customer determined to enter the store carries the commodity;
settling a price of the commodity which is monitored as being carried by the customer, according to an instruction from the customer;
determining that the customer leaves the store; and
generating history data including suspicious data indicating that the customer, identified by an identification code, is associated with an unsettled commodity being carried out of the store, when a settlement of the commodity carried by the customer which is determined to leave the store is not completed.

9. The store management method according to claim 8, further comprising:
storing each of a plurality of pieces of history data generated for the same customer by the generation unit.

10. The store management method according to claim 8 or 9, wherein the history data includes information regarding a commodity that has been monitored and determined to be unsettled.

11. The store management method according to any one of claims 8 to 10 , further comprising:
issuing an alarm when a customer associated with the suspicious data included in the history data visits the store.

12. The store management method according to any one of claims 8 to 11, wherein the history data further includes a date and time when the customer enters the store, and a date and time when the customer leaves the store.

13. The store management method according to any one of claims 8 to 12, further comprising:
communicating with at least one of a plurality of sensors to monitor that the customer, each of the plurality of sensors configured to detect a behavior of the customer and a display status of the commodity.

14. The store management method according to any one of claims 8 to 13, further comprising:
communicating with at least one of a plurality of sensors to determine that the customer leaves the store, each of the plurality of sensors configured to detect a behavior of the customer and a display status of the commodity.
